(19) Europäisches Patentamt
European Patent Office
Office européen des brevets

(11) **EP 4 600 810 A1**

(12) **EUROPÄISCHE PATENTANMELDUNG**

(43) Veröffentlichungstag:
**13.08.2025 Patentblatt 2025/33**

(21) Anmeldenummer: **25153477.2**

(22) Anmeldetag: **23.01.2025**

(51) Internationale Patentklassifikation (IPC):
**G06F 8/41** (2018.01)       **H01M 8/04992** (2016.01)

(52) Gemeinsame Patentklassifikation (CPC):
**G06F 8/41; H01M 8/04992**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **06.02.2024 DE 102024201042**

(71) Anmelder: **Robert Bosch GmbH**
**70442 Stuttgart (DE)**

(72) Erfinder:
• **Fischer, Alexander**
**99734 Nordhausen (DE)**
• **Bachmann, Bernhard**
**33619 Bielefeld (DE)**
• **Heuermann, Andreas**
**33615 Bielefeld (DE)**
• **Lenord, Oliver**
**71065 Sindelfingen (DE)**

(54) **VORRICHTUNG UND COMPUTERIMPLEMENTIERTES VERFAHREN ZUM ERZEUGEN VON MASCHINENCODE**

(57)     Vorrichtung und computerimplementiertes Verfahren zum Erzeugen von Maschinencode (102) zur näherungsweisen Lösung eines Gleichungssystems, insbesondere zur Herstellung eines eingebetteten Systems (104) vorzugsweise zur Regelung eines technischen Systems (106), wobei das Gleichungssystem ausgebildet ist, Ausgangsgrößen des Gleichungssystems mit dem Gleichungssystem abhängig von Eingangsgrößen des Gleichungssystems zu bestimmen, wobei das Gleichungssystem wenigstens eine algebraische Schleife umfasst, wobei Werte der Eingangsgrößen bereitgestellt werden, wobei Werte der Ausgangsgrößen durch Lösen des Gleichungssystems mit der wenigstens einen algebraischen Schleife für die Werte der Eingangsgrößen bestimmt werden, wobei mit symbolischer Regression abhängig von den Werten der Eingangsgrößen und den Werten der Ausgangsgrößen ein Ersatzgleichungssystem ohne algebraische Schleifen bestimmt wird, das ausgebildet ist, die Ausgangsgrößen des Gleichungssystems mit dem Ersatzgleichungssystem abhängig von den Eingangsgrößen des Gleichungssystems zu bestimmen, und wobei der Maschinencode (102) abhängig von den Gleichungen des Ersatzmodells bestimmt wird.

**Fig. 1**

**Beschreibung**

Stand der Technik

Die Erfindung geht aus von einer Vorrichtung und einem computerimplementiertes Verfahren zum Erzeugen von Maschinencode.

Herkömmliche Verfahren zum Erzeugen von Maschinencode ausgehend von einem Gleichungssystem, das algebraischen Schleifen umfasst, sehen eine Transformation in einen Zustandsraum vor, in dem die Gleichungen neu aufgestellt und angeordnet werden, um eine Form des Gleichungssystems zu erhalten, die einen sequentielle Berechnung der Lösung des Gleichungssystems erlaubt.

Offenbarung der Erfindung

Durch das Verfahren und die Vorrichtung gemäß den unabhängigen Ansprüchen wird ausgehend von einem Gleichungssystem, das algebraische Schleifen umfasst, zuverlässiger Maschinencode für ein eingebettetes System erzeugt, der eine näherungsweise Lösung des Gleichungssystems bestimmt, ohne algebraische Schleifen zu benötigen. Maschinencode ohne algebraische Schleifen eignet sich besonders gut für eingebettete Systeme. Durch das computerimplementierte Verfahren und die Vorrichtung wird der Maschinencode unabhängig von Messdaten bereitgestellt.

Das computerimplementiertes Verfahren zum Erzeugen von Maschinencode zur näherungsweisen Lösung eines Gleichungssystems, insbesondere zur Herstellung eines eingebetteten Systems vorzugsweise zur Regelung eines technischen Systems sieht vor, dass das Gleichungssystem ausgebildet ist, Ausgangsgrößen des Gleichungssystems mit dem Gleichungssystem abhängig von Eingangsgrößen des Gleichungssystems zu bestimmen, wobei das Gleichungssystem wenigstens eine algebraische Schleife umfasst, wobei Werte der Eingangsgrößen bereitgestellt werden, wobei Werte der Ausgangsgrößen durch Lösen des Gleichungssytems mit der wenigstens einen algebraischen Schleife für die Werte der Eingangsgrößen bestimmt werden, wobei mit symbolischer Regression abhängig von den Werten der Eingangsgrößen und den Werten der Ausgangsgrößen ein Ersatzgleichungssystem ohne algebraische Schleifen bestimmt wird, das ausgebildet ist, die Ausgangsgrößen des Gleichungssystems mit dem Ersatzgleichungssystem abhängig von den Eingangsgrößen des Gleichungssystems zu bestimmen, und wobei der Maschinencode abhängig von den Gleichungen des Ersatzmodells bestimmt wird.

Es kann vorgesehen sein, dass wenigstens eine der Eingangsgrößen und/oder wenigstens eine der Ausgangsgrößen einen Betriebszustand oder eine physikalische Größe des technischen Systems oder einer Umgebung des technischen Systems repräsentieren. Die Eingangsgrößen können selbst Betriebszustände oder physikalische Größen repräsentieren.

Es kann vorgesehen sein, dass die Werte wenigstens einer der Eingangsgrößen und/oder wenigstens einer der Ausgangsgrößen in einem Wertebereich bereitgestellt werden, der nur Werte umfasst, die im technischen System oder einer Umgebung des technischen Systems auftreten können. Dies reduziert die Rechenressourcen, die zur Bestimmung der Ersatzgleichungen erforderlich sind, und vermeidet eine Verschlechterung einer Güte der Näherung in dem für die jeweilige Anwendung relevanten Bereich.

Es kann vorgesehen sein, dass der Wertebereich für wenigstens eine der Ausgangsgrößen durch ein mehrfaches Lösen der die Ausgangsgröße bestimmenden Gleichung aus dem Gleichungssystem für unterschiedliche Eingangsgrößen bestimmt wird. Der Wertebereich wird z.B. durch Simulation des Gleichungssystems bestimmt.

Es kann vorgesehen sein, dass die Werte wenigstens einer der Eingangsgrößen und/oder wenigstens einer der Ausgangsgrößen abhängig von einer Größe bestimmt werden, die im technischen System oder einer Umgebung des technischen Systems messbar ist. Die Werte können interne Rechengrößen eines Modells des technischen Systems sein, die abhängig von messbaren Eingangsgrößen bzw. Ausgangsgrößen des technischen Systems bestimmt werden.

Es kann vorgesehen sein, dass abhängig von wenigstens einer der Ausgangsgrößen ein Betriebszustand oder eine physikalische Größe des technischen Systems oder einer Umgebung des technischen Systems bestimmt oder beeinflusst wird.

Es kann vorgesehen sein, dass zur Herstellung des eingebetteten Systems der Maschinencode im eingebetteten System gespeichert wird.

Es kann vorgesehen sein, dass das technische System mit dem im eingebetteten System gespeicherten Maschinencode abhängig von den Eingangsgrößen und den Ausgangsgrößen geregelt wird.

In einem Beispiel umfassen die Eingangsgrößen eine Machzahl, einen Isentropen Exponenten, einen Massenstrom, eine Temperatur, einen Druck, eine Strömungsgeschwindigkeit, eine Schallgeschwindigkeit, eine spezifische Gaskonstante, eine Querschnittsfläche, einen Totaldruck und/oder eine Totaltemperatur. In einem Beispiel umfassen die Ausgangsgrößen den Druck, die Temperatur, die Strömungsgeschwindigkeit, die Schallgeschwindigkeit, die Machzahl und/oder einen Impuls.

In einem Beispiel umfasst das technische System eine Strahlpumpe zur Rückführung von Wasserstoff von einem Auslass eines Andodenkreislaufs eines Brennstoffzellenstapels zu einem Einlass des Anodenkreislaufs, wobei die Ausgangsgrößen einen Druck und eine Temperatur des Wasserstoffs repräsentieren, wobei die Eingangsgrößen einen Isentropen Exponenten, und eine Machzahl umfassen, die durch eine Gleichung des Gleichungssystem abhängig vom Druck und der Temperatur des Wasserstoffs bestimmt wird, und wobei die Eingangsgrößen der Ersatzgleichungen einen Totaldruck und eine Totaltemperatur umfassen, die von anderen Gleichungen des Gleichungssystems unabhängig sind.

Die Vorrichtung zum Erzeugen von Maschinencode zur näherungsweisen Lösung eines Gleichungssystems, insbesondere zur Herstellung eines eingebetteten Systems vorzugsweise zur Regelung eines technischen Systems ist ausgebildet, das Verfahren auszuführen.

Es kann ein Computerprogramm vorgesehen sein, das von einem Computer ausführbare Instruktionen umfasst, bei deren Ausführung durch den Computer das Verfahren abläuft.

Weitere vorteilhafte Ausführungsformen sind der folgenden Beschreibung und der Zeichnung entnehmbar. In der Zeichnung zeigt.

Fig. 1 eine schematische Darstellung einer Vorrichtung zum Erzeugen von Maschinencode insbesondere zur Herstellung eines eingebetteten Systems vorzugsweise zur Regelung eines technischen Systems,
Fig. 2 ein Flussdiagramm mit Schritten eines Verfahrens zum Erzeugen von Maschinencode insbesondere zur Herstellung des eingebetteten Systems vorzugsweise zur Regelung des technischen Systems,
Fig. 3 eine schematische Darstellung eines beispielhaften technischen Systems,
Fig. 4 zeitliche Verläufe eines Drucks und eine näherungsweise bestimmten Drucks,
Fig. 5 zeitliche Verläufe einer Temperatur und einer näherungsweise bestimmten Temperatur.

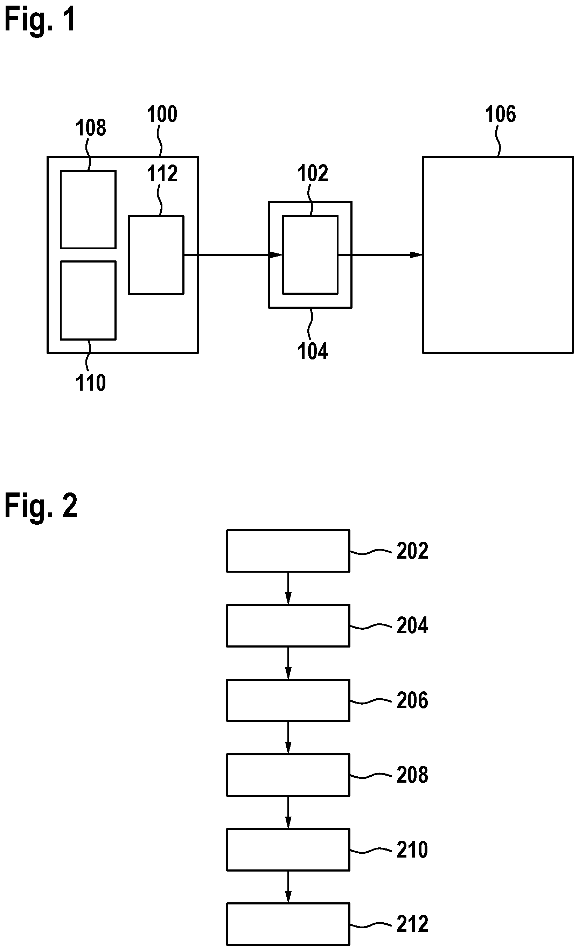

In Figur 1 ist eine Vorrichtung 100 zum Erzeugen von Maschinencode 102 zur näherungsweisen Lösung eines Gleichungssystems mit wenigstens einer algebraischen Schleife, d.h. eines Gleichungssystems mit wenigstens einer zirkulären Abhängigkeit, schematisch dargestellt.

Die Vorrichtung 100 ist optional zur Herstellung eines eingebetteten Systems 104 dazu ausgebildet, den Maschinencode 102 im eingebetteten System 104 zu speichern.

Das eingebettete System 104 ist in einem Beispiel zur Regelung eines technischen Systems 106 ausgebildet.

Die Vorrichtung 100 ist ausgebildet, ein Verfahren zum Erzeugen des Maschinencodes 102 insbesondere zur Herstellung des eingebetteten Systems 104 vorzugsweise zur Regelung des technischen Systems 106 auszuführen.

Die Vorrichtung 100 umfasst wenigstens einen Prozessor 108, wenigstens einen Speicher 110 und eine Schnittstelle 112 zum eingebetteten System 104.

In Figur 2 ist ein Flussdiagramm mit Schritten des Verfahrens dargestellt.

Das Gleichungssystem ist ausgebildet, Ausgangsgrößen des Gleichungssystems mit dem Gleichungssystem abhängig von Eingangsgrößen des Gleichungssystems zu bestimmen.

Beispielsweise repräsentiert wenigstens eine der Eingangsgrößen einen Betriebszustand oder eine physikalische Größe des technischen Systems 106.

Beispielsweise repräsentiert wenigstens eine der Ausgangsgrößen einen Betriebszustand oder eine physikalische Größe des technischen Systems 106.

Das Gleichungssystem umfasst Gleichungen, die zu einer algebraischen Schleife gehören oder zu mehreren algebraischen Schleifen gehören. Das Gleichungssystem kann Gleichungen umfassen die zu keiner algebraischen Schleife gehören.

Das bedeutet, das Gleichungssystem umfasst Gleichungen, die eine algebraische Schleife bilden.

Der Maschinencode, der zur Lösung des Gleichungssystems mit algebraischen Schleifen erforderlich ist, weist aufgrund der algebraischen Schleife oder aufgrund der algebraischen Schleifen einen für die Herstellung von Maschinencode für das eingebettete System 104 ungünstigen Bedarf an Rechenressourcen auf. Die Lösung des Gleichungssystem erfordert ein iteratives Verfahren. Die Echtzeitfähigkeit des iterativen Verfahrens kann nicht garantiert werden, wenn das Gleichungssystem eine algebraische Schleife oder mehrere algebraische Schleifen aufweist, weil unbekannt ist, wie viele Iterationen das Verfahren benötigt und ob das Verfahren konvergiert.

Das Verfahren umfasst einen Schritt 202.

Im Schritt 202 werden Werte der Eingangsgrößen bereitgestellt.

Beispielsweise werden die Werte wenigstens einer der Eingangsgrößen abhängig von einer Größe bestimmt, die im technischen System 106 oder einer Umgebung des technischen Systems 106 messbar ist.

Beispielsweise werden die Werte wenigstens einer der Eingangsgrößen in einem Wertebereich bereitgestellt der nur Werte umfasst, die im technischen System 106 oder einer Umgebung des technischen Systems 106 auftreten können.

Das Verfahren umfasst einen Schritt 204.

Im Schritt 204 werden Werte der Ausgangsgrößen durch Lösen des Gleichungssystems mit der wenigstens einen algebraischen Schleife für die Werte der Eingangsgrößen bestimmt.

Der Wertebereich für wenigstens eine der Ausgangsgrößen wird z.B. durch ein mehrfaches Lösen der die Ausgangsgröße bestimmenden Gleichung aus dem Gleichungssystem für unterschiedliche Eingangsgrößen bestimmt.

Beispielsweise werden die Werte wenigstens einer der Ausgangsgrößen in einem Wertebereich bereitgestellt der nur Werte umfasst, die im technischen System oder einer Umgebung des technischen Systems auftreten können.

Es kann vorgesehen sein, dass die Werte wenigstens einer der Ausgangsgrößen abhängig von einer Größe bestimmt, die im technischen System 106 oder einer Umgebung des technischen Systems 106 messbar ist.

Das Verfahren umfasst einen Schritt 206.

Im Schritt 206 wird mit symbolischer Regression abhängig von den Werten der Eingangsgrößen und den Werten der Ausgangsgrößen ein Ersatzgleichungssystem ohne algebraische Schleifen bestimmt, das ausgebildet ist, die Ausgangsgrößen des Gleichungssystems mit dem Ersatzgleichungssystem abhängig von den Eingangsgrößen des Gleichungssystems zu bestimmen.

Das Ersatzgleichungssystem kann die Gleichungen aus dem Gleichungssystem mit der wenigstens einen algebraischen Schleife umfassen, die nicht zu einer algebraischen Schleife gehören.

In der symbolischen Regression werden im Beispiel mathematische Operationen vorgegeben und je algebraischer Schleife mindestens eine Ersatzgleichung gefunden, die zumindest von einem Teil der Eingangsgrößen abhängt, und Werte der Ausgangsgröße bestimmt, die möglichst gut mit den Werten übereinstimmen, die die zu ersetzende Gleichung für die Werte der Eingangsgrößen bestimmt. Dadurch stimmt die näherungsweise Lösung der jeweiligen Gleichungen durch die jeweilige Ersatzgleichung möglichst gut mit der Lösung überein, die durch die Verwendung der jeweiligen Gleichungen selbst erreichbar ist.

Beispielsweise werden nur die Gleichungen, die zu einer algebraischen Schleife gehören, durch Ersatzgleichungen ersetzt. Vorzugsweise wird je algebraischer Schleife nur eine der Gleichungen, die zu dieser algebraischen Schleife gehört, durch wenigstens eine Ersatzgleichung ersetzt. Dadurch erfolgt die symbolische Regression Rechenressourcenschonend.

Beispielsweise werden die Gleichungen, die zu keiner algebraischen Gleichung gehören, unverändert belassen, wodurch keine über die näherungsweise Lösung dieser Gleichungen hinausgehende Ungenauigkeit bei der Lösung Ersatzgleichungssystems entstehen kann. Daher stimmt die Lösung des Ersatzgleichungssystem bis auf die näherungsweise Lösung der Ersatzgleichungen mit der Lösung des Gleichungssystems überein.

Es kann vorgesehen sein, dass die Gleichung, die zu einer algebraischen Schleife gehört, d.h. für die eine Ersatzgleichung bestimmt wird, im Gleichungssystem automatisiert gesucht wird, oder dass die Gleichungen, die zu einer algebraischen Schleife gehören, d.h. für die eine Ersatzgleichung bestimmt wird, im Gleichungssystem automatisiert gesucht werden.

Beispielsweise wird dazu wie in Andreas Heuermann, Philip Hannebohm, Bernhard Bachmann. "Replacing Strong Components with ANN". 31. Januar 2022, OpenModelica Annual Workshop 2022, presentation https://open modelica.org/images/M_images/OpenModelicaWorkshop_2022/1355 _Replacing_Strong_Components_with_ANN.pdf beschrieben vorgegangen.

Das Verfahren umfasst einen Schritt 208.

Im Schritt 208 wird der Maschinencode 102 abhängig von den Gleichungen des Ersatzmodells bestimmt.

Es kann vorgesehen sein, dass das Verfahren zum Herstellen des eingebetteten Systems einen Schritt 210 umfasst.

Im Schritt 210 wird der Maschinencode 102 im eingebetteten System 104 gespeichert.

Es kann vorgesehen sein, dass das Verfahren zum Regeln des technischen Systems 106 einen Schritt 212 umfasst.

Im Schritt 212 wird beispielsweise abhängig von wenigstens einer der Ausgangsgrößen ein Betriebszustand oder eine physikalische Größe des technischen Systems 106 oder einer Umgebung des technischen Systems 106 bestimmt.

Beispielsweise wird das technische System 106 abhängig vom Betriebszustand oder von der physikalischen Größe geregelt.

Im Schritt 212 wird beispielsweise abhängig von wenigstens einer der Ausgangsgrößen ein Betriebszustand oder eine physikalische Größe des technischen Systems 106 beeinflusst. Beispielsweise wird das technische System 106 wird abhängig vom Betriebszustand oder von der physikalischen Größe geregelt.

Im Schritt 212 wird beispielsweise abhängig von wenigstens einer der Ausgangsgrößen ein Betriebszustand oder eine physikalische Größe einer Umgebung des technischen Systems 106 beeinflusst. Beispielsweise beeinflusst das technische System 106 den Betriebszustand oder die physikalische Größe der Umgebung.

Beispielweise wird das technische System 106 mit dem im eingebetteten System 104 gespeicherten Maschinencode 102 abhängig von den Eingangsgrößen und den Ausgangsgrößen geregelt.

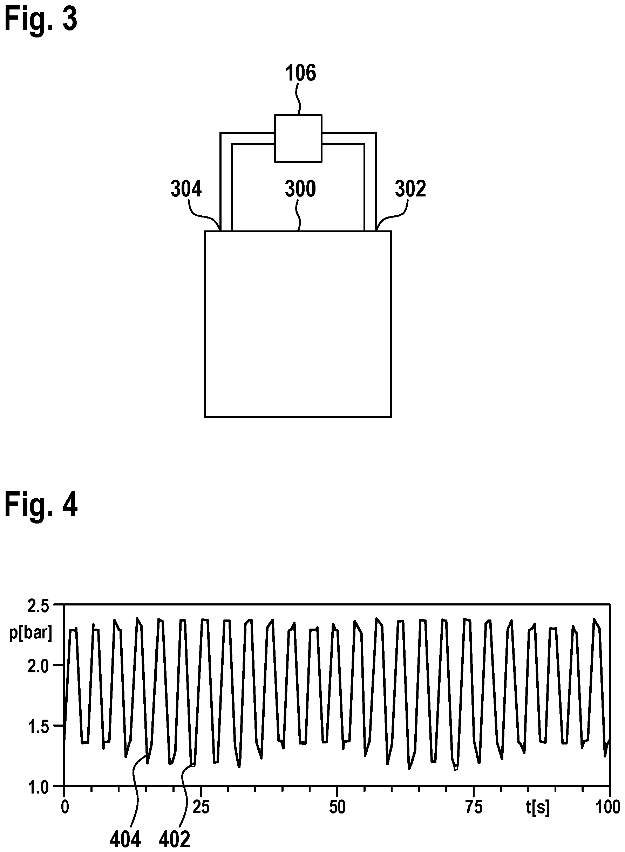

In Figur 3 ist ein beispielhaftes technisches Systems 106 schematisch dargestellt.

Das technische System 106 ist im Beispiel eine Strahlpumpe eines Brennstoffzellenstapels 300.

Die Strahlpumpe ist ausgebildet, Wasserstoff von einem Auslass 302 eines Anodenkreislaufs des Brennstoffzellenstapels 300 zu einem Einlass 304 des Anodenkreislaufs zu fördern.

Die Gleichungen, die das Verhalten der Strahlpumpe beschreiben sind im Folgenden angegeben.

Die Eingangsgrößen der Gleichungen umfassen eine Machzahl Ma, einen Isentropen Exponenten k, einen Massenstrom mflow, eine Temperatur T, einen Druck p, eine Strömungsgeschwindigkeit v, eine Schallgeschwindigkeit c, eine spezifische Gaskonstante R_s, eine Querschnittsfläche A, einen Totaldruck p_0 und eine Totaltemperatur T_0

Die Ausgangsgrößen der Gleichungen umfassen den Druck p, die Temperatur T, die Strömungsgeschwindigkeit v, die Schallgeschwindigkeit c, die Machzahl Ma und einen Impuls I umfassen.

$$p\_0/p=(1+(k-1)/2 * Ma^2)^{(k/(k-1))}$$

$$T\_0/T = (1+(k-1)/2 * Ma^2)$$

$$v = R\_s * mflow/A * T/p$$

$$c = sqrt(k*R\_s*T)$$

$$Ma = v/c$$

$$I = v * mflow$$

wobei sqrt die Wurzelfunktion repräsentiert und nach ^ ein Exponent für den Ausdruck vor ^ steht.

Im Gleichungssystem gehören die ersten beiden Gleichungen zu einer algebraischen Schleifen, da die Machzahl Ma vom Druck p und der Temperatur T abhängt, während die Gleichungen zur Bestimmung von p und T ihrerseits von Ma abhängig sind. Die übrigen Gleichungen des Gleichungssystems sind gehören nicht zu einer algebraischen Schleife.

Durch das Verfahren werden abhängig von Werten der Eingangsgrößen und der Ausgangsgrößen der Gleichungen für die ersten beiden Gleichungen die folgenden Ersatzgleichungen bestimmt:

p = ((p_0 + (-1 * sqrt(T_0))) * (0.5483443 + (1.7069604 * sqrt(sqrt(mflow))))) + (-1 * (-0.004339092 + mflow) * (5.246307e6 + T_0)) T = T_0 * (1.0472907 + (-1 * mflow * (15.949435 + (-0.20818402 * sqrt(mflow * (p_0 + (-2.307301 * T_0)))))))

Das Ersatzgleichungssystem enthält die Ersatzgleichungen und die folgenden Gleichungen aus dem Gleichungssystem.

$$v = R\_s * mflow/A * T/p$$

$$c = sqrt(k*R\_s*T)$$

$$Ma = v/c$$

$$I = v * mflow$$

Das bedeutet, das Ersatzgleichungssystem enthält keine Gleichungen, die zu einer algebraischen Schleife gehören.

Das eingebettete System 104 wird z.B. mit Maschinencode 102 implementiert, der das Ersatzgleichungssystem umfasst. Damit wird im Beispiel die Strahlpumpe geregelt.

In Figur 4 ist ein mit dem Gleichungssystem bestimmter Verlauf 402 des Drucks p über der Zeit t und ein mit dem Ersatzgleichungssystem bestimmter näherungsweiser Verlauf 404 des Drucks p über der Zeit t dargestellt.

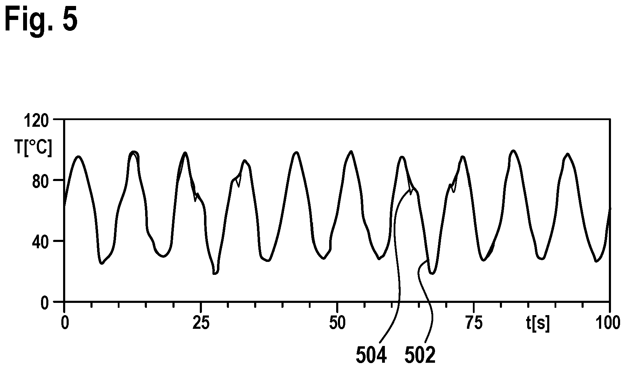

In Figur 5 ist ein mit dem Gleichungssystem bestimmter Verlauf 502 der Temperatur T über der Zeit t und ein mit dem Ersatzgleichungssystem bestimmter näherungsweiser Verlauf 504 der Temperatur T über der Zeit t dargestellt.

Im Beispiel ist die Dimension des Gleichungssystems größer als die Dimension des Ersatzgleichungssystems. Trotz der gegenüber der Dimension des Gleichungssystems kleineren Dimension des Ersatzgleichungssystem ist die näherungsweise Lösung ausreichend gut für die Verwendung in der Regelung der Strahlpumpe.

**Patentansprüche**

1. Computerimplementiertes Verfahren zum Erzeugen von Maschinencode (102) zur näherungsweisen Lösung eines Gleichungssystems, insbesondere zur Herstellung eines eingebetteten Systems (104) vorzugsweise zur Regelung eines technischen Systems (106), **dadurch gekennzeichnet, dass** das Gleichungssystem ausgebildet ist, Ausgangsgrößen des Gleichungssystems mit dem Gleichungssystem abhängig von Eingangsgrößen des Gleichungssystems zu bestimmen, wobei das Gleichungssystem wenigstens eine algebraische Schleife umfasst, wobei Werte der Eingangsgrößen bereitgestellt werden (202), wobei Werte der Ausgangsgrößen durch Lösen des Gleichungssystems mit der wenigstens einen algebraischen Schleife für die Werte der Eingangsgrößen bestimmt werden (204), wobei mit symbolischer Regression abhängig von den Werten der Eingangsgrößen und den Werten der Ausgangsgrößen ein Ersatzgleichungssystem ohne algebraische Schleifen bestimmt wird (206), das ausgebildet ist, die Ausgangsgrößen des Gleichungssystems mit dem Ersatzgleichungssystem abhängig von den Eingangsgrößen des Gleichungssystems zu bestimmen, und wobei der Maschinencode (102) abhängig von den Gleichungen des Ersatzmodells bestimmt wird (208).

2. Verfahren nach Anspruch 1, **dadurch gekennzeichnet, dass** wenigstens eine der Eingangsgrößen und/oder wenigstens eine der Ausgangsgrößen einen Betriebszustand oder eine physikalische Größe des technischen Systems (106) oder einer Umgebung des technischen Systems (106) repräsentieren.

3. Verfahren nach einem der vorherigen Ansprüche, **dadurch gekennzeichnet, dass** die Werte wenigstens einer der Eingangsgrößen und/oder wenigstens einer der Ausgangsgrößen in einem Wertebereich bereitgestellt werden (202), der nur Werte umfasst, die im technischen System oder einer Umgebung des technischen Systems (106) auftreten können.

4. Verfahren nach einem der vorherigen Ansprüche, **dadurch gekennzeichnet, dass** der Wertebereich für wenigstens eine der Ausgangsgrößen durch ein mehrfaches Lösen der die Ausgangsgröße bestimmenden Gleichung aus dem Gleichungssystem für unterschiedliche Eingangsgrößen bestimmt wird (202).

5. Verfahren nach einem der vorherigen Ansprüche, **dadurch gekennzeichnet, dass** die Werte wenigstens einer der Eingangsgrößen und/oder wenigstens einer der Ausgangsgrößen abhängig von einer Größe bestimmt werden (202), die im technischen System oder einer Umgebung des technischen Systems (106) messbar ist.

6. Verfahren nach einem der vorherigen Ansprüche, **dadurch gekennzeichnet, dass** abhängig von wenigstens einer der Ausgangsgrößen ein Betriebszustand oder eine physikalische Größe des technischen Systems (106) oder einer Umgebung des technischen Systems (106) bestimmt oder beeinflusst wird (212).

7. Verfahren nach einem der vorherigen Ansprüche, **dadurch gekennzeichnet, dass** der Maschinencode (102) im eingebetteten System (104) gespeichert wird (210).

8. Verfahren nach einem der vorherigen Ansprüche, **dadurch gekennzeichnet, dass** das technische System mit dem im eingebetteten System gespeicherten Maschinencode (102) abhängig von den Eingangsgrößen und den Ausgangsgrößen geregelt wird (212).

9. Verfahren nach einem der vorherigen Ansprüche, **dadurch gekennzeichnet, dass** die Eingangsgrößen eine Machzahl, einen Isentropen Exponenten, einen Massenstrom, eine Temperatur, einen Druck, eine Strömungsgeschwindigkeit, eine Schallgeschwindigkeit, eine spezifische Gaskonstante, eine Querschnittsfläche, einen Totaldruck und/oder eine Totaltemperatur umfassen, und/oder wobei die Ausgangsgrößen den Druck, die Temperatur, die Strömungsgeschwindigkeit, die Schallgeschwindigkeit, die Machzahl und/oder einen Impuls umfassen.

10. Verfahren nach einem der vorherigen Ansprüche, **dadurch gekennzeichnet, dass** das technische System eine Strahlpumpe zur Rückführung von Wasserstoff von einem Auslass eines Anodenkreislaufs eines Brennstoffzellenstapels zu einem Einlass des Anodenkreislaufs umfasst, wobei die Ausgangsgrößen einen Druck und eine Temperatur des Wasserstoffs repräsentieren, wobei die Eingangsgrößen einen Isentropen Exponenten, und eine Machzahl umfassen, die durch eine Gleichung des Gleichungssystem abhängig vom Druck und der Temperatur des Wasserstoffs bestimmt wird, und wobei die Eingangsgrößen der Ersatzgleichungen einen Totaldruck und eine Totaltemperatur umfassen, die von anderen Gleichungen des Gleichungssystems unabhängig sind.

11. Vorrichtung (100) zum Erzeugen von Maschinencode (102) zur näherungsweisen Lösung eines Gleichungssystems, insbesondere zur Herstellung eines eingebetteten Systems (106) vorzugsweise zur Regelung eines technischen Systems (106), **dadurch gekennzeichnet, dass** die Vorrichtung (100) ausgebildet ist, das Verfahren nach einem der Ansprüche 1 bis 10 auszuführen.

12. Computerprogramm, **dadurch gekennzeichnet, dass** das Computerprogramm von einem Computer ausführbare Instruktionen umfasst, bei deren Ausführung durch den Computer das Verfahren nach einem der Ansprüche 1 bis 10 abläuft.

# Fig. 1

# Fig. 2

# Fig. 3

# Fig. 4

# Fig. 5

Europäisches Patentamt
European Patent Office
Office européen des brevets

# EUROPÄISCHER RECHERCHENBERICHT

**Nummer der Anmeldung**

EP 25 15 3477

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | HEUERMANN ANDREAS ET AL: "Accelerating the simulation of equation-based models by replacing non-linear algebraic loops with error-controlled machine learning surrogates", PROCEEDINGS OF THE 15TH INTERNATIONAL MODELICA CONFERENCE 2023, AACHEN, OCTOBER 9-11, 22. Dezember 2023 (2023-12-22), Seiten 275-284, XP093289304, DOI: 10.3384/ecp204275 ISBN: 978-91-8075-505-4 Gefunden im Internet: URL:https://ecp.ep.liu.se/index.php/modelica/article/download/935/843 [gefunden am 2025-06-24] | 1-9,11, 12 | INV. G06F8/41 H01M8/04992 |
| A | * Abstract, S. 275 * <br> * Kap. 2, S. 276 * <br> * Gleichungen 1 und 2 in Kap. 2, S. 276 * <br> * Kap. 3.2 und 3.2.2, S. 277 * <br> * Kap. 3.3, S. 278 * <br> * Kap. 3.5, S. 279 * <br> * Kap. 4, S. 279 * <br> * Kap. 4.2, S. 280 * <br> * Kap. 4.2.2, S. 281 * <br> ----- <br> -/-- | 10 | |

**RECHERCHIERTE SACHGEBIETE (IPC)**

G06F
H01M

Der vorliegende Recherchenbericht wurde für alle Patentansprüche erstellt

| Recherchenort | Abschlußdatum der Recherche | Prüfer |
|---|---|---|
| München | 24. Juni 2025 | Hoisl, Bernhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
 
& : Mitglied der gleichen Patentfamilie, übereinstimmendes Dokument

EPO FORM 1503 03.82 (P04C03)

Europäisches
Patentamt

European
Patent Office

Office européen
des brevets

# EUROPÄISCHER RECHERCHENBERICHT

**Nummer der Anmeldung**

EP 25 15 3477

## EINSCHLÄGIGE DOKUMENTE

| Kategorie | Kennzeichnung des Dokuments mit Angabe, soweit erforderlich, der maßgeblichen Teile | Betrifft Anspruch | **KLASSIFIKATION DER ANMELDUNG (IPC)** |
|---|---|---|---|
| A | Heuermann Andreas ET AL: "Fehlerkontrollierte ML-Surrogate zur beschleunigten Simulation nichtlinearer Gleichungssysteme in Modelica", , 1. November 2023 (2023-11-01), XP093289317, DOI: 10.13140/RG.2.2.11838.70729 Gefunden im Internet: URL:https://www.researchgate.net/profile/Andreas-Heuermann/publication/376199149_Fehlerkontrollierte_ML-Surrogate_zur_beschleunigten_Simulation_nichtlinearer_Gleichungssysteme_in_Modelica/links/657835 8d6610947889bb3ae6/Fehlerkontrollierte-ML-Surrogate-zur-beschleunigten-Simulation-nichtlinearer-Gleichun [gefunden am 2025-06-24] * das ganze Dokument * ----- | 1-12 | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| München | 24. Juni 2025 | Hoisl, Bernhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes Dokument

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **ANDREAS HEUERMANN** ; **PHILIP HANNEBOHM** ; **BERNHARD BACHMANN**. Replacing Strong Components with ANN. *OpenModelica Annual Workshop 2022*, 31 January 2022, https://openmodelica.org/images/M_images/OpenModelicaWorkshop_2022/1355 _Replacing_Strong_Components_with_ANN.pdf